Europäisches Patentamt

European Patent Office

Office européen des brevets

(19)

(11) **EP 1 327 947 A1**

(12) **EUROPEAN PATENT APPLICATION**
published in accordance with Art. 158(3) EPC

(43) Date of publication:
**16.07.2003 Bulletin 2003/29**

(21) Application number: **01967774.9**

(22) Date of filing: **21.09.2001**

(51) Int Cl.⁷: **G06F 17/60**

(86) International application number:
**PCT/JP01/08226**

(87) International publication number:
**WO 02/025526 (28.03.2002 Gazette 2002/12)**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **22.09.2000 JP 2000288958**

(71) Applicant: **Takeda Chemical Industries, Ltd.
Osaka-shi, Osaka 541-0045 (JP)**

(72) Inventors:
• **ANDO, Kan
  Urayasu-shi, Chiba 279-0026 (JP)**
• **HAYAKAWA, Takaki
  Toyono-gun, Osaka 563-0105 (JP)**
• **TAKASHIGE, Michio
  Ibaraki-shi, Osaka 567-0833 (JP)**

(74) Representative:
**von Kreisler, Alek, Dipl.-Chem. et al
Patentanwälte
von Kreisler-Selting-Werner
Postfach 10 22 41
50462 Köln (DE)**

(54) **SYSTEM FOR EVALUATING PROFITABILITY OF DEVELOPED MEDICINE**

(57)    A profitability-evaluating system (10) for a medical drug candidate under development comprises a data set-creating subsystem (100) and a management index-calculating subsystem (200). The data set-creating subsystem (100) includes a sales amount-estimating section (110), an Cost-estimating section (120), a net present value (or NPV)-calculating section (131), an internal rate of return (or IRR)-calculating section (140), a repetitive calculation section (150) for creating a data set by fluctuating the respective values determined by the estimating sections and the calculating sections, within predetermined distribution widths, and a data set-recording section (160). The management index-calculating subsystem includes a volatility-calculating section (201), an option value-calculating section (202) and a project value-calculating section (203). With the above arrangement, there is provided the system for evaluating a profitability from an investment in the research and development of a medical drug, by utilizing the real option method.

Fig.5

**Description**

Technical Field

The present invention relates to a system for evaluating a profitability from an investment in the research and development of a medical drug by employing the real option method.

Background Art

In general, monetary value can be created by investing money in an enterprise of which the net present value (hereinafter simply referred to as NPV) is positive. When a company actually decides an investment in an. enterprise, they take into consideration a lot of elements involving a variety of risky factors and employ a variety of investment-deciding criteria. Hereinafter, the investment-deciding criteria practically employed by many companies are described (see Business seminar, "KEIEIZAIMU NYUMON (Guide to Management and Financial Affairs)", by Shosuke Ide and Fumio Takahashi, Nihon Keizai Shinbunsha).

Firstly, the ideas based on cash flow include the net present value (NPV) method and the internal rate of return (hereinafter simply referred to as IRR) method.

(1) Net Present Value (NPV)

The NPV method is a method for indicating how much return will be finally yield from an investment in a certain project. Concretely, the NPV indicates a monetary value determined by subtracting the initial investing value from the present value of a future return. A positive NPV means that the present value of cash flow which is discounted using an opportunity cost (discount rate) which reflects risks is larger than the initial investing value. If the return from an investment in a certain project (e.g., an investment in a project of research and development) is higher than the return from an investment in a risky project on the market, it means that the investment in this project of research and development is more profitable than the operation of an investment at a discount rate.

It is to be noted that the NPV method, however, has problems in that the conclusion led by the NPV method changes depending on what percentage the discount rate is set to, and that estimation of a future cash flow is difficult, and therefore that there is a possible large difference between optimistic estimation and pessimistic estimation.

(2) Internal Rate of Return (IRR) Method

The internal rate of return or IRR is a discount rate which discounts NPV to zero. According to the decision of an investment by this method, any project is employed, if the internal rate of return which exceeds the discount rate of capital, i.e., the capital cost of a company is obtained. IRR is expressed in percentage and therefore can be easily compared. Thus, the IRR method is suitable in case where the most profitable project is found out on condition that the amount of investment is limited to a predetermined amount. However, the IRR method does not always induce a correct conclusion when the amount of investment is not so strictly limited, because an investment is decided based on the rate of return, independently of the scale of a yield. Further, this method has a danger of inducing a conclusion different from the NPV method, depending on timing at which cash flow is evaluated.

Next, the return capitalization method and the payback method, by which long-term decision-making is done simply based on profits, will be described.

(3) Return capitalization method

In the return capitalization method, a profit to be gained from investment is estimated based on an estimated profit in future in each accounting period or on an average historical profit from similar investments in past, and the present value is calculated by discounting the estimated profit at a predetermined discount rate, and a decision on whether investment is done or not is made based on such a present value. However, this method is difficult to estimate a long-term profit in future. Therefore, it is necessary to pay one's attention on a possibility of large difference between optimistic estimation of a profit and pessimistic estimation thereof.

(4) Payback (Payback Period) Method

The payback method is an investment-deciding method in which money is invested in only a project from which the initial investing amount can be recovered within a certain period determined by the company (cutoff period). The payback Period refers to a period required for the total of estimated profits which will be gained in future from the investment, to become equal to the initial investing amount. Accordingly, a capital is invested in a project of which the payback Period is shorter than the cutoff period determined by the company. However, the payback method has problems in that only the profits gained within the payback period are taken into account, and that possible profits gained after the payback period are not at all considered. Further, according to the payback method, discount of a profit to the present value is not taken into account. The payback method has a merit in its ease to understand, but is not so suitable in view of evaluation of an effective and substantial investment.

Among the foregoing investment-deciding criteria, the net present value (or NPV) method has advantages different from other methods, in that a cash flow but not a profit is employed and that a cash flow over a whole period of investment is taken into account. Therefore, it is appreciated that the evaluation of an investment in a project should be made based on the NPV method.

In spite of the above appreciation of the superiority of the NPV method over the other methods, this method is very difficult to estimate a cash flow and market environment in a far future, for example, in case of deciding an investment in a medical drug candidate which requires a long period of research and development. Therefore, the NPV method can not avoid a possibility that the strategic value of the research may not be accurately grasped. This is because the cash flow is analyzed over a long period of time and therefore, a positive cash flow in future is largely discounted. As a result, there is a danger that parameters such as a variety of fluctuation factors and risks are not properly evaluated.

To solve these problems, the concept of an option analysis as described below recently has been employed (see L. Trigeorigis, 1996, "Real Options", MIT Press).

(5) Real Option Method

Generally, companies who have chances to invest have options to select whether capitals in compensation for purchase of valuable projects should be expended at present or in future. In other words, the investment chance means a plurality of options in view of management.

The real option refers to a numerical value which indicates a degree of freedom which permits an economic person making an irreversible decision to delay his decision under uncertain circumstances. In other words, the real option is an option of management which is selected under business circumstances with high uncertainty. As well as an option to securities, the real option includes a decision or right left to one's discretion, which is not accompanied by one's duty to gain or exchange an asset at a specified price. Such a decision or right means a decision or right to delay an investment, expand a business, conclude a contract, or dump a facility or change the use thereof. The real option method having the above features can be applied to evaluation of investments in projects in various fields. Examples of such fields are R & D project of a new product, investment in venture business, natural resource enterprise, real estate development and lease business, evaluation of M & A, management of governmental subsidy and regulations, etc.

The real option method is not strictly defined nor formulated, differently from financial options. Therefore, to apply the real option method, what options are included in an investment in a project to be evaluated must be firstly confirmed.

In another view, by confirming what options are provided in the field of a project in which capital is invested, a variety of methods of applying the real option are created. In the present invention, the term "the real option" is used in two senses, i.e., in a narrow sense and in a wide sense. The real option method in a narrow sense applies the theory of option pricing used to evaluate a financial option: for example, the value of an option is calculated by utilizing the binominal model or the formula of the Black-Scholes. On the other hand, the real option method in a wide sense is to appraise the value of an option by utilizing the conventional NPV method and the decision tree analysis, and this method does not always employ the option pricing theory to evaluate a real option. In this regard, the following are instances and literature which employ the real option method to evaluate the economical values of the research and development of medical drug candidates.

(1) Merck Co., Ltd. (Diamond Harvard Business, April-May, 1994), (2) Amgen Co., Ltd. (Diamond Harvard Business, August-September, 2000), (3) "Real Options Evaluation Pharmaceutical R & D: A new approach to financial project evaluation", by Kerstin Bode-Greuel, MD, SCRIP Reports 17th February, 2000, PJB Publications Ltd., (4) Real Options Conference, "Real Options valuation in the information economy: Internet/High-Tech, R & D/Pharmaceuticals, Energy", Cambridge UK, July 5-6, 2000.

Disclosure of Invention

As mentioned above, the real option method lately has been employed in place of the NPV method, however, the concept thereof has not been known so long. At present, the following several problems are therefore left to remain, and thus, there is a limit in the application of this method to economical evaluation of projects such as researches and developments in companies.

1) Model Risk

In the real option method, real options are set before evaluation models are constructed. In some cases, it is impossible to establish the mathematical basis of a model, if sufficient pieces of information on the market environment, the competition circumstance, and environments surrounding relative to an object to be evaluated, are not obtained in this stage. In such a case, a model risk occurs: that is, a solution indicated by a model established based on insufficient information is apart from a theoretical solution. In a long-term and complex case such as development of a medical drug, it is necessary to recognize a possibility of such an error.

2) Private Risk

The values of many of real options are greatly influenced by risks peculiar to companies and organizations, in other words, private risks. The private risks involve a lot of factors such as a variety of individual activities peculiar to companies, the abilities of members constituting organizations, etc. If a decision-making is done by the real option method while paying excessive attentions on the private risks, the mathematical model portion, i.e., the model portion constructed by objective data is underestimated. Thus, a solution is induced by subjective factors. As a result, the meaning of logistical determination of a real option is lost. Accordingly, it becomes necessary to take a balance with main risks which can be evaluated based on pieces of information obtainable from the market, while taking into account only the causes of the most important private risk.

3) Volatility

The term "volatility" (coefficient of fluctuation or price fluctuation) is used in transaction of financial options, and the volatility indicates a range of estimation within which a stock price will fluctuate in future. As the volatility increases, the option price also rises. On the other hand, the real option method is always accompanied by a problem on how to set a volatility for each of projects to be evaluated. The setting of the volatility is easy if the data of an analogous project in past are kept in the company. However, in case where the company enters a novel and inexperienced project on the market, there exists no generalized rule on how to set a volatility. Therefore, there is a tendency that the volatility is arbitrarily set including private risks. If so set, occurrence of incompleteness of a substitute is unavoidable, and objectivity lacks in estimation with high possibility.

Summary of the Invention

As a result of the present inventors' studies to solve the above problems 1) and 2) which the conventional real option methods confront, they have found out a measure which makes it possible for even one having no expertise to easily evaluate a financial value of a medical drug candidate under development of which the fluctuation widths of the market environment and product potential are large. That is, a plurality of evaluation points are set in a period of time from the research and development of the medical drug until the start of sale thereof; and a profitability in case of entering the next developing stage is estimated at each of the evaluation points by an integrated system (A) of two subsystems as below:

1. Data Set-Creating Subsystem

(1) Sales amount-estimating section
(2) Cost-estimating section
(3) NPV-calculating section
(4) IRR-calculating section
(5) Data set-recording section

2. Management Index-Calculating Subsystem

(1) Option value-calculating section
(2) Project value-calculating section
By doing so, the financial value of the above medical drug candidate under development can be easily evaluated.

Further, the present inventors have advanced the studies in order to solve the problem about the setting of volatility described in the item 3). As a result, they have found out a measure to obtain a further objective result without an operator's arbitrariness by using a system (B): the system (B) comprises a repetitive calculation section which performs simulations a plural times while suitably selecting each of the fluctuation widths of the values determined by the sections (1) to (4) of the subsystem 1 of the above system (A); and the system (B) determines a volatility from a data set obtained as the result of the repetitive calculations, and uses this volatility to calculate the value of an option by an operation according to the formula of the Black-Scholes. By doing so, the further objective result without the operator's arbitrariness can be obtained. Thus, the present invention is accomplished based on such findings.

In particular, the system (A), of the present invention, for evaluating a profitability of a medical drug candidate under development comprises a data set-creating subsystem and a management index-calculating subsystem. The data set-creating subsystem comprises a sales amount-estimating section; an Cost-estimating section which estimates an expense from a manufacturing parameter and an operation parameter; a NPV-calculating section which calculates a cash flow and a net present value from the estimated sales amount and the estimated expense; an IRR-calculating section which calculates an internal rate of return from the cash flow, an estimated investing amount and a success probability; and a data set-recording section. The management index-calculating subsystem comprises a section which calculates the value of an option from the data set on the data set-recording section, and a section which calculates the value of a medical drug developing project from the value of the option.

Further, the system (B) of the present invention which evaluates a profitability of a medical drug candidate under development comprises a repetitive calculating section which creates data by fluctuating the respective values determined by the estimating sections and the calculating sections of the data set-creating subsystem of the above system (A), within predetermined distribution widths; and a data set-recording section which records the data set created by the repetitive calculating section. Further, a volatility-calculating section which calculates a volatility from the data set on the data set-recording section, and an option value-calculating section which calculates the value of an option by the formula of the Black-Scholes, using the calculated volatility are added to the management index-calculating subsystem in the system (A).

The profitability-evaluating system for a medical drug candidate under development, of the present invention, is able to estimate a profitability from an investment in a long term of research and development of a medical drug at each of the developing stages. The evaluation system can provide a highly objective management index without any private risk involved, because a volatility which is determined from the objectively calculated fluctuation width of the net present value (or NPV) at each of the developing stages is applied to the real option method for estimation.

Brief Description of Drawings

Fig. 1 is flowchart of an example of a profitability-evaluating system (A) according to the present invention.
Fig. 2 is a graph showing an example of a probability distribution of a product power determined by the data set-creating system of the profitability-evaluating system of the present invention.
Fig. 3 is a graph showing an example of a probability distribution of a product power determined by the data set-creating system of the profitability-evaluating system of the present invention.
Fig. 4 is a graph showing an example of a probability distribution of a product power determined by the data set-creating system of the profitability-evaluating system of the present invention.
Fig. 5 is a flowchart of an example of a profitability-evaluating system (B) of the present invention.
Fig. 6 is a graph showing an example of NPV distribution determined by the data set-creating system of the profitability-evaluating system of the present invention.
Fig. 7 is a graph showing an example of contribution rate of each of the parameters which may influence the fluctuation of NPV, according to the profitability-evaluating system of the present invention.

Best Mode for Carrying out the Invention

Hereinafter, preferred embodiments of the present invention will be described with reference to the accompanying drawings. In the profitability-evaluating system (10) of the present invention, the developing term from development of a medical drug to the time when the sale of the medical drug is started is divided into a plurality of developing stages, and an evaluation point is set at each time of judging whether or not the development is advanced to the next developing stage, and a profitability of the next developing stage is evaluated at the evaluation point. It is also possible to add a basic researching stage prior to the clinical development, to this developing term and divide this total term into a plurality of developing stages.

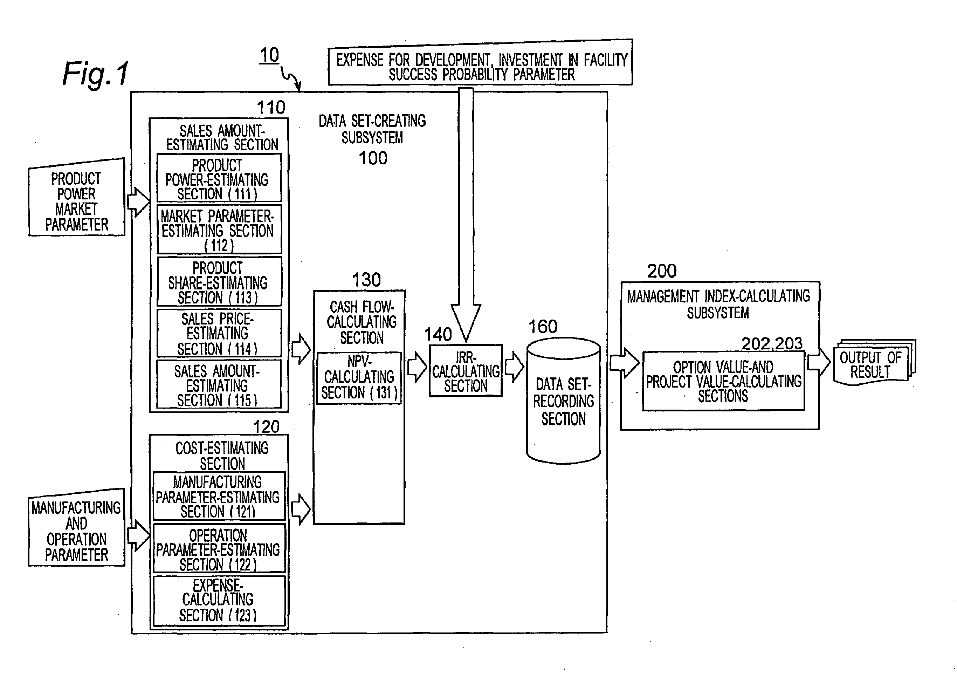

Fig. 1 shows a whole of "a profitability-evaluating system (10) for a medical drug candidate under development" according to the present invention. The profitability-evaluating system (10) comprises a control unit, a calculation unit, a memory, an input unit and an output unit, as well as a conventional computer system, and the system (10) is composed of a data set-creating subsystem (100) and a management index-calculating subsystem (200).

I. Data Set-Creating Subsystem (100)

The date set-creating subsystem (100) comprises a sales amount-estimating section (110), an Cost-estimating section (120), a cash flow-calculating section (130), an IRR-calculating section (140) and a data set-recording section (160). The processing of each of the sections is described below.

(1) Sales Amount-Estimating Section

The sales amount-estimating section (110) induces the share [iii] of a product by using the product power [i] of the medical drug candidate to be evacuated and the other present drugs which are anticipated to compete with one another on the same market, and a market parameter [ii] into which a category market, a scheduled sale-starting time and sales force are integrated; and then, the section (110) calculates an estimated sales amount [v] by combining this share [iii] with an estimated sales price [iv]. The sales amount-estimating section (110) comprises a product power-estimating section (111), a market parameter-estimating section (112), a product share-estimating section (113), a sales price-estimating section (114) and a sales amount-estimating section (115), in correspondence with the calculation processing of the factors [i] to [v].

[i] Product Power

The term "product power" herein used means an index which is determined by presuming how many degrees a medical drug candidate under development could satisfy medical needs, based on profiles expected to the medical drug candidate under development, such as a pharmaceutical efficacy, a side effect, convenience, etc. In the present invention, the product power is expressed by using UNS (Unmet Need Score, described in, for example, Decision Resources Inc., Decision Base III) which indicates the degree of insufficiency to the medical needs. Therefore, the lower the value of UNS, the better the product (having a higher product power).

Pre-clinical experiments and clinical study elucidate the product power of a product and provide materials based on which the product is judged as being higher or lower than the standards the product is demanded to have. However, the real product power involving these materials can not be univocally determined. In this specification, the product power will be described, on the assumption that the UNS distribution of the product is in accordance with a normal distribution.

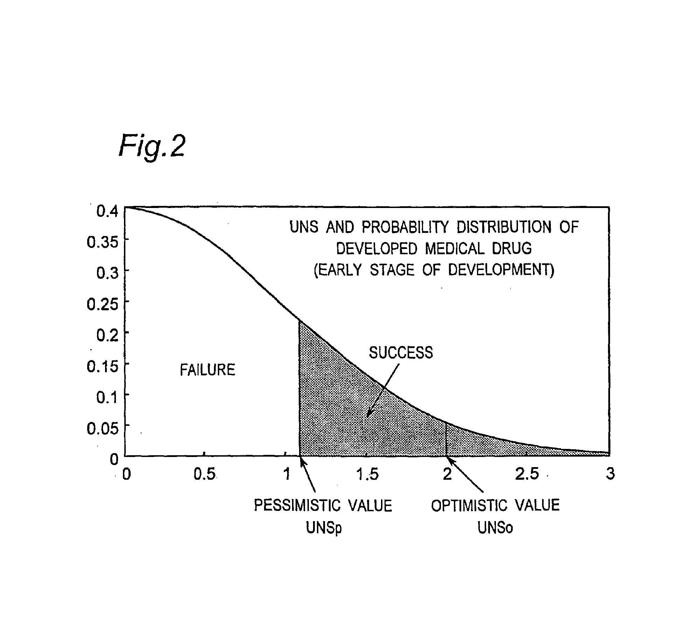

Further, in the present invention, the pessimistic estimated value relative to UNS, i.e., the product power, is supposed to be UNSp (UNSgs) equivalent to the strongest competitive product (Gold Standard). This standard is assumed to be a product quality on an approved border line, and the probability of products having qualities above the GS as the result of the evaluation of development including clinical study is supposed to be a probability which is obtained by totaling success probabilities of the respective developing stages from the time of evaluation to a scheduled sale-starting time (a consistent success probability up to the sale-starting time). On the other hand, an optimistic estimation is supposed to represent, for example, 5% of UNS (UNSo) on the right side of the normal distribution. Then, in case where the success probability of a medical drug candidate under development in an early developing stage such as a preclinical stage or the like is supposed to be, for example, 0.14 until the start of sale thereof, a pessimistic value and an optimistic value are expressed by the scale of the normal distribution, with the result that a probability distribution shown in Fig. 2 is obtained in which UNSp is indicated at 1.08 SD (standard deviation), and UNSo, at 1.96 SD on the right side.

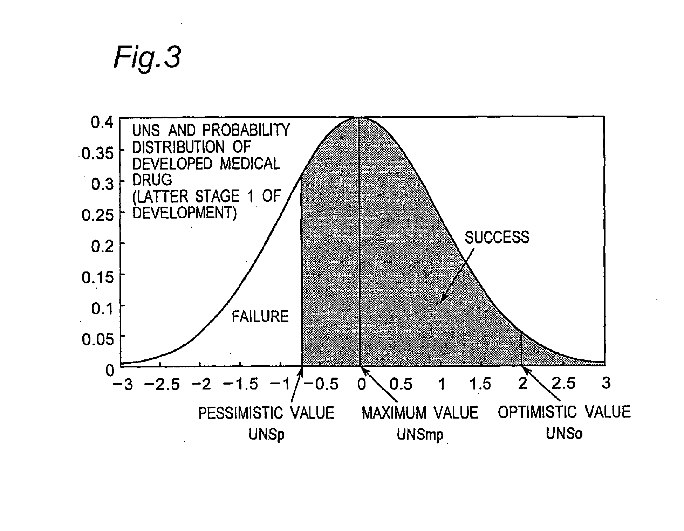

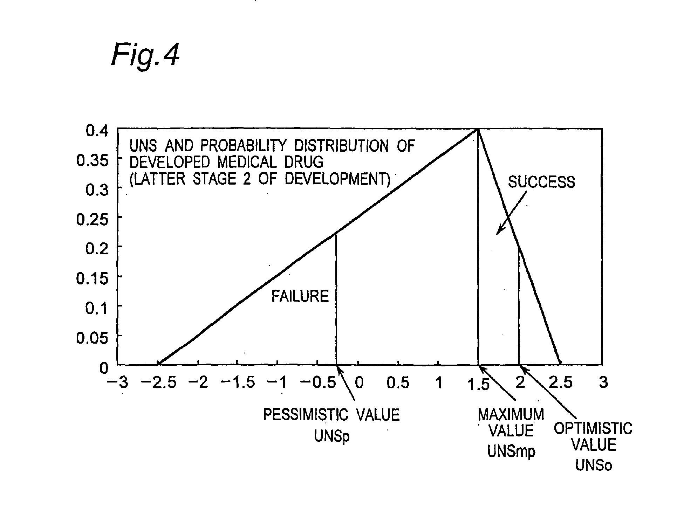

Further, in case where the success probability is supposed to be, for example, 0.76 in a late developing stage, the peak of a success probability distribution is at the right side of UNSp which is a pessimistic UNS, as shown in Fig. 3. This case can employ a method of presuming the possibility of the medical drug candidate under development by taking into account three points which are a pessimistic estimation, an optimistic estimation and an additional UNS (a most probable value) which is considered to be most probable. In case where the most probable value is largely different from a probability distribution according to the normal distribution, it is preferable that a distribution as shown in Fig. 4 is assumed.

The product power determined herein influences the following market parameter [ii], product share [iii] and estimated sales price [iv].

[ii] Market Parameter

The market parameter referred to in the present invention is basic information on the market to which a medical drug candidate under development will be launched, and such information includes pieces of information relative to the category market such as the number of patients, etc., pieces of information relative to a product such as a scheduled sale-starting time, etc., and pieces of information relative to the operation such as sales force, etc.

1) Category Market

The number of patients to which drugs will be administered is determined by multiplying the number of potential patients by the rate of diagnosis and the rate of prescription.

Prior to the estimation of category market, firstly, the category market is strictly defined by finely dividing the disease market. The category herein referred to is a set of medical drugs whose product characteristics are analogous to one another. In this regard, the product characteristics are represented by, for example, an action mechanism, the nature of a clinical symptom or an effective rate to be improved, the nature of a side effect or the incidence thereof, an administration route, and the number of administrations. Among these characteristics, a gold standard (or GS) is definitely indicated in not only this category but also other categories.

The market scale is expressed by the amount of drugs administered for total prescribed number of days per year. Firstly, the disease market is analyzed, and the amount of drug administered to one patient for a prescribed number of days for each of the categories is presumed. Then, the amount of the drugs administered for total days of these prescribed numbers of days is defined as a total market of the disease.

Among those, this category market scale is determined as a product which is obtained by multiplying the number of patients to which drugs are administered by the amount of the drug administered to one patient for a prescribed number of days and a category share of this category (described later). The fluctuation pattern of the market scale is in accordance with the normal distribution or the like.

The category market scale (the amount of the drug administered for the prescribed number of days) can be determined by the above method. In case where the category market is further determined based on the amount of money, the category market scale is multiplied by an average price of drugs within the category market.

In this regard, if the data of the monetary base of the category market is included in data base, it is also possible to estimate, from such data base, the market which will be found after a scheduled sale-starting time. Also in this case, the monetary market is decomposed into the number of patients to which the drugs are administered, the amount of the drugs administered for the prescribed number of days and the average price, and then, the respective parameters which will be found after the scheduled sale-starting time are estimated to thereby presume the category market.

(i) Estimation Formula (Equation 1)

[Equation 1]

Category market scale (the amount of drugs administered for a prescribed number of days) $= \alpha \cdot \beta \cdot \gamma$

$\alpha$: The number of patients to which the drugs are administered (the number of potential patients · diagnosis rate · prescription rate)

$\beta$: The amount of the drugs administered for an average prescribed number of days per year (the amount of the drugs for treating the present disease, administered to average patients for total days of the prescribed numbers of days) $\gamma$: Category share (the share of the present category drug out of the average amount of the drugs administered to the patients suffering from the present disease, for the prescribed number of days per year)

(ii) The number of patients to which the drugs are administered ($\alpha$)

The number of patients ($N_j$) to which the drugs are administered is determined by Equation 2 as below, on the assumption that the number of potential patients who will suffer from the present disease in the j-th year from the sale-starting year is $P_j$; the diagnosis rate, $A_j$; and the prescription rate, $B_j$.

[Equation 2]

$$Nj = Pj \cdot Aj \cdot Bj$$

(iii) The amount of the drugs administered for average prescribed number of days per year (β)

The amount of the drugs administered for an average prescribed number of days per year is the amount of the drugs for treating the present disease, administered to the average patients for total prescribed number of days per year. This amount, of course, differs year by year. Although the category may rise and decline, a change of the category with time is supposed to be small, and on this assumption, the amount of the drugs administered for the average prescribed number of days per year is presumed by using the data of the latest market statistics or the like.

On the assumption that the amount of the drug for treating the present disease, administered to one patient of the category i for the prescribed number of days per year is $U_i$, an average (V) of the amount of the drugs of all the categories administered to patients who suffer from the present disease for the average prescribed number of days per year is determined by Equation 3 as below.

[Equation 3]

$$V = (\sum_{i=1}^{n} Ui) / \mathrm{n}$$

wherein n is the number of total categories on an objective market.

(iv) Category share (γ)

The competitive power ($C_{ij}$) of a certain category i in the j-th year is determined by Equation 4 below, on the assumption that the UNS of a typical product of a category having the lowest competitive power in the market of the present disease is $UNS_A$; and the UNS of the gold standard of the category i, $UNS_1$.

[Equation 4]

$$C_{ij} = a_{ij}\{10(UNS_A - UNS_i) + 1.0\}$$

wherein $a_{ij}$ represents a spreading rate of a new category including the product of the company: for example, the sale of a first drug of that category is supposed to linearly increase from the start of sale thereof, and to reach a saturation level for example in 10 years. The coefficient $a_{ij}$ is supposed to be 1 in a category in which the sale has reached a saturation point at the sale-starting time of the product of the company. Accordingly, the coefficient $a_{im}$ found in the m-th year from the sale-starting year of the first product of the present category is defined as 0.1*m up to the 10th year after such start, and as 1.0 after the 10th year.

The category share ($S_{tj}$) of this category t in the j-th year is determined by Equation 5 below.

[Equation 5]

$$S_{tj} = C_{tj} / \sum_{i=1}^{n} Cij$$

(v) Category market scale based on the amount of the drugs administered for prescribed number of days

The category market scale ($CM_{tj}$) on the j-th year form the start of sale of the product of the company is determined by Equation 6 below.

[Equation 6]

$$CM_{tj} = N_j \cdot V \cdot S_{tj}$$

(vi) Category market scale based on monetary amount

The monetary amount-based category market scale is determined by multiplying the category market scale based on the amount of the drugs administered for the prescribed number of days by the average price in the j-th year on that category market.

2) Scheduled Sale-Starting Time

The scheduled time for starting the sale of a medical drug candidate under development as a product is presumed from the experiences, as basic information for calculating a product share. It is also possible to presume two different sale-starting times based on an optimistic value and a pessimistic value as a box-shaped distribution.

3) Sales force

As the basic information for calculating the share of the product, the sales force may be defined as operating power at the scheduled sale-starting time, for example, a presumed number of medical representatives (MR). If such presumption is difficult, the number of medical representatives present at the evaluation point may be employed.

[iii] Product share

A medical drug candidate under development of a competitive company which is anticipated to be brought into the present category market is definitely known, and the UNS and the scheduled sale-starting time of such a medical drug are foreseen. The world-wide standard developing time is applied to the estimation of the sale-starting time.
If the medical drug candidate under development is in the stage of pre-clinical investigation, a competitive compound in the same category or the profiles of the drug are, in many cases, unknown. In such a case, several medical drug candidates under development are abstractedly assumed as "unexpected competitive products". In this case, the strategies of other companies are deliberately considered before making a decision.
The competitive power on the market (the integrated competitive power) found when the medical drug candidates under development of the company themselves and the competitive company reach top shares (the 4th year from the sale-starting time in standard) is calculated from three factors, that is, the UNS, the scheduled sale-starting time (delay a certain period of years or months from the sale of the first product) and the sales force (the numbers of persons in MR of the company themselves and the competitive company at the sale-starting time) of the medical drug candidates under development. The market share is calculated as a proportion of the competitive power on the market (the integrated competitive power).
A change in the market share of the present medical drug candidate under development on the market with the passage of time is supposed to rise in a predetermined pattern, and it is supposed to be kept constant during a period between the top share time and the expiration of the patent, and then, to rapidly lower.

1) Competitive power of a product

The competitive power of a product is calculated as a relative value of the product power of a medical drug candidate under development as follows.

The following description is made on the assumption that the UNS of the k-th product composing the market of the present category is $UNS_k$; and the UNS of a medical drug candidate under development evaluated the lowest in the category, $UNS_m$. The competitive power ($D_{kp}$) of the k-th product in the peak share-reaching year (p) is calculated by Equation 7 below.

[Equation 7]

$$D_{kp} = 10(UNS_m - UNS_k) + 1.0$$

2) Integrated competitive power

The integrated competitive power is calculated as follows from the competitive power, the scheduled sale-starting time and the sales force of the product, and years required to reach a peak share.

The following description is made, for example, on the assumption that the scheduled sale-starting year of the k-th product is $T_k$; the sale-starting year of the first product of the category, $T_0$; and the sales force of the k-th product, $MR_k$ (the number of persons in MR of the company). Then, the integrated competitive power ($W_{kj}$) of the k-th product in the j-th year after the sale is calculated by Equation 8 below.

[Equation 8]

$$W_{kj} = D_{kp} \cdot f(T_k - T_0) \cdot MR_k \cdot h(j, p)$$

On condition that x equals ($T_k - T_0$), f(x) is a function which is 1 at the maximum when x equals zero, and which is 0.2 when x equals 6.

$$f(x) = 0.00021x^5 - 0.00116x^4 - 0.00176x^3 - 0.00794x^2 - 0.04277x + 1.00049 \ (0 \le x \le 6)$$

$$f(x) = 0.2 \ (6 < x)$$

The function, g(x), indicating the sales force $MR_k$ is an index of the sales force calculated from the number of MR, and this function is convergent to 1.0 when the MR is constituted by not smaller than 2,000 persons.

$$g(x) = -2.034E(-07)x^2 + 8.705E(-04)x + 6.868E(-02)$$

$$(0 < x \le 2,000)$$

$$g(x) = 1.0 \ (2,000 < x)$$

The product-raising pattern is indicated by h(j, p), which is a function expressed as below in the j-th year after the sale, provided that the years required from the sale of the product to a peak share-reaching time is p years.

$$h(j, p) = (-0.476 \cdot p^2 + 6.791 \cdot p - 26.29) \cdot (p - j)^2 + 100$$

$(j \le P)$

$$h(j, p) = 100 \ (j > p)$$

3) Market share of each year

The market share ($MS_{kj}$) of the product k in the j-th year is calculated by Equation (9) below.

[Equation 9]

$$MS_{kj} = W_{kj} / \sum_{k=1}^{n} W_{kj}$$

4) Estimated sales amount based on the amount of the product administered for a prescribed number of days

The estimated sales amount ($SAL_{yj}$) of the present medical drug candidate under development y in the j-th year is determined by Equation 10 below, from the category market scale in that year determined in the item 1) of [ii] and the market shares in that year determined in the items 2) and 3) of [ii].

[Equation 10]

$$SAL_{yj} = N_j \cdot V \cdot S_{tj} \cdot MS_{yj}$$

[iv] Estimated sales price

The price (PR) of the medical drug candidate under development per day at the scheduled sale-starting time is estimated from the experiences, using a control drug or GS as a control product on a close or analogous market. The price of the present product per day in the j-th year is expressed as "$PR_{yj}$".
In some cases, the pessimistic value and the optimistic value of the price are separately estimated corresponding to the pessimistic value and the optimistic value of the UNS of the present product. In addition, it is also possible to set the fluctuation rate of the price per year.

[v] Estimated sales amount

It is possible to estimate the sales amount in each year after the sale-starting time, as the amount of the product administered for a prescribed number of days. The sales amount is determined by multiplying the category market scale (the amount of the product administered for the prescribed number of days) by the market share.
If needed, correction due to the valid period of the patent may be added. For example, the sales amount linearly decreases to 10 through 50% of the amount found when the patent has expired, in three years after the expiration of the patent.
The estimated sales amount based on the monetary amount is calculated by multiplying the estimated sales amount in each year (the amount of the product administered for the prescribed number of days) by the sales price in each year.
The monetary amount-based estimated sales amount ($Sal_{yj}$) in the j-th year after the sale is calculated by Equation 11 below, from the estimated sales amount based on the amount of the product administered for the prescribed number of days ($SAL_{yj}$) and the price per day ($PR_{yj}$).

[Equation 11]

$$Sal_{yj} = SAL_{yj} \cdot PR_{yj}$$

(2) Cost-estimating Section

The Cost-estimating section (120) for estimating expenses which will be spent after the sale-starting time calculates an estimated expense [iii] from the sum of manufacturing parameters [i] such as a manufacturing cost on the basis of the amount of the product administered per day, etc., and operation parameters [ii] such as sales cost as the total of direct expense, promotion cost and expenses for investigation after the sale, etc. The Cost-estimating section (120) includes a manufacturing parameter-estimating section (121), an operation parameter-estimating section (122) and an expense-calculating section (123) corresponding to the processing of the calculations [i] to [iii], respectively.

[i] Manufacturing parameter

The manufacturing cost out of the manufacturing parameters is calculated by multiplying the estimated sales amount of an objective medical drug candidate under development by the amount of the drug administered per day to determine a manufacturing amount, and multiplying the manufacturing amount by a manufacturing unit price determined from the experiences.

The fluctuation width of the amount of the drug administered per day is set within an empirically known range. Otherwise, it may be set from a box-shaped distribution constituted by three different amounts based on an optimistic value, a medium value and a pessimistic value. For example, the three amounts are set at 10 mg, 20 mg and 40 mg, to which probabilities of 0.25, 0.5 and 0.25 are set, respectively.

The fluctuation width of the manufacturing unit price is set within an empirically known range, and it may be set from a box-shaped distribution constituted by three types of unit prices based on an optimistic value, a medium value and a pessimistic value. For example, the manufacturing unit price of 10 mg of tablets are set at ¥50, ¥75 and ¥100, to which probabilities of 0.3, 0.4 and 0.3 are set.

[ii] Operation parameters

1) Direct expense

The direct expense is the remainder as the result of the subtraction of the following promotion cost and expense spent for investigation after the sale, from the sales expense and the general maintenance fee.

2) Promotion cost

The promotion cost includes advertising expenses (scientific publicity expenses and general advertising expenses), seminar membership fees, test medical drug cost, etc.

3) Expenses for investigation after the commercial sale

The investigation after the commercial sale is to observe the side effects, etc. caused by a long term of administration of the drug or the administration of the drug in combination with other drug, after the commercial sale of the drug, and these expenses are spent for such investigation.

4) Other expenses

In addition to the above expenses, other relevant expenses may be included in the operation parameters, if needed. For example, outcome study cost, royalties paid for the license to use the patents of other companies, etc. are included therein. The fluctuation of royalties can be supposed in accordance with, for example, the pattern of a normal distribution.

[iii] Estimated expenses

The sum of the manufacturing parameters [i] and the operation parameters [ii] is defined as the estimated expenses [iii].

(3) Cash Flow-Calculating Section

The cash flow-calculating section (130) includes a NPV-calculating section (131). The NPV-calculating section (131) first calculates a cash flow [i] from the estimated sales amount calculated in the item [v] of (1) and the estimated expense calculated in the item [iii] of (2), and multiplies the cash flow [i] by a discount rate to determine NPV [ii] at a scheduled sale-starting time.

[i] Cash flow

A cash flow in one year during an evaluation term is determined according to a conventional method, using an estimated sales amount, an estimated expense, taxes, etc. in each year. The evaluation term means a period of time for which the present value of the medical drug candidate under development can be admitted, and, for example, it is defined as a period of time from the scheduled sale-starting time to a point of time at which three years has passed since the expiration of a patent.

It is preferable to take the fluctuation of the rate of exchange into account, as required. This rate of exchange may be a log-term rate of exchange in accordance with a normal distribution with a standard deviation of 5 to 20% based on the rule of thumb.

[ii] NPV

The cash flow thus obtained is discounted at a predetermined discount rate with respect to a period of time up to the scheduled sale-starting time to determine NPV for the scheduled sale-starting time. The discount rate referred to herein may be optionally set: for example, it may be set at 10% or so.

(4) IRR-Calculating Section

The IRR-calculating section (140) involves a success probability [ii] of the developing stage, into the cash flow calculated in the item [i] of (3) and an estimated investing amount [i] to thereby calculate IRR [iii].

[i] Estimated investing amount

The estimated investing amount includes an estimated expense for development and an estimated investing amount in facilities in each of the developing stages between each of the plurality of the evaluation points which are set in the term for development up to the sale-starting time, and if needed, an estimated nonrecurring charge for development may be added to the estimated investing amount.

The estimated expense for development can be presumed from an empirical value. For example, this expense is calculated by multiplying elements such as the number of diseases, the number of steps and the period of time in the course of the development, by a unit price cost per patient required for clinical study.

The estimated investing amount in facilities is calculated by estimating the scale of facilities needed corresponding to the estimated sales amount.

The estimated nonrecurring charge for development means, for example, a milestone fee which is paid to a license for using the patent of other company, or the like.

A decrease in the amount of taxes in association with the investment may be taken into account when the estimated expense for development and the estimated nonrecurring charge for development are calculated.

[ii] Success probability

The success probability of the developing stage is defined as a probability to advance to the next developing stage after the performance that a medical drug candidate under development should satisfy in each of the developing stages is scientifically demonstrated.

The success probability in each of the developing stages are set at an empirical value, taking into account the characteristics of the medical drug candidate under development and the latest scientific data. The success probability of a clinical developing stage is described in FDA Consumer, Special Issue, From Test Tube To Patient: New Drug Development in United States, Second edition, Jan., 1995 (http://www.fda.gov/fdac/special/newdrug/ndd_toc. html, httm://www.fda.gov/fdac/special/newdrug/testing.html).

In case where 1 to n-1 developing stages are supposed, a consistent success probability P up to the sale-starting time is determined by Equation 12 below.

[Equation 12]

$$P = P_1 \cdot P_2 \dots \cdot P_{n-1}$$

[iii] IRR

The discount rate r which satisfies the following Equation 13 is defined as IRR.

[Equation 13]

$$\sum_{i=o}^{T-1} (Pi \times Ii)/(1+r)^i = \sum_{i\approx T}^{T+Te} (P \times CFi)/(1+r)^i$$

　　T: A term (years) from the time of an evaluation point to a scheduled sale-starting time
　　Pi: A probability of investment in the i-th year from the time of the evaluation point.

In other words, the probability Pi is expressed as follows, at the k-th developing stage in the i-th year from the time of the evaluation point:

$$Pi = P_1 \cdot P_2 \cdot \dots \cdot P_{k-1}$$

　　Ii: An estimated investing amount which will be found in the i-th year from the time of the evaluation point
　　Te: A term (years) from a scheduled sale-starting time for which a cash flow is evaluated
　　P: A consistent success probability from the time of the evaluation point to the sale-starting time
　　GFi: A cash flow which will be found in the i-th year from the time of the evaluation point

As mentioned above, the parameters determined in the respective estimating sections and the respective calculating sections include ones obtained from the predetermined continuous probability distributions, ones obtained from two points of an optimistic value and a pessimistic value, and ones obtained from specified values. In the profitability-evaluating system (B) of the present invention as will be described later, simulations are performed which involves conditions and events which will be expected when these parameter values are fluctuated at random in accordance with the respective expected distributions, and the results of the simulations are used for the calculation of a next management index. Therefore, this process has no room for an evaluating person's arbitrariness. However, in the system (A) described now, an evaluating person can determine a data set by optionally selecting the values of these parameters and use the data set for the calculation of a management index. Therefore, by using the system (A), one can evaluate each of the developing stages while confirming the influences of the respective parameters on a profitability.

(5) Data Set-Recording Section

The data set-recording section (160) stores all the data which are used for the calculations in the sales amount-estimating section (110), the Cost-estimating section (120), the cash flow-calculating section (130) and the IRR-calculating section (140). Any of memory devices which record data on media (e.g., magnetic discs and optical discs) magnetically, optically or by other means, and read the data recorded on such media can be used as the data set-recording section (160).

II. Management Index-Calculating Subsystem

First, the management index-calculating subsystem of the profitability-evaluating system (A) which employs the real option method in a wide sense is described.

The management index-calculating subsystem (200) comprises an option value-calculating section (202) and a project value-calculating section (203). The subsystem (200) calculates the management index of the medical drug candidate under development at the time of evaluation point by the real option method, using the data set created by the data set-creating subsystem (100). Then, the subsystem (200) obtains a specified option value and a specified project value of the medical drug candidate under development as the management index, from the data set.

(1) Option value-calculating section

The option value-calculating section (202) applies the idea of an option as a means for speculation to the research and development, and calculates the value (Ci) of the option at the developing stage i by the following equation.

[Equation 14]

$$C_i = MAX[0, (ENPV(i)-EPAV(i)]$$

$$ENPV(i) = NPV \cdot P_i \cdot \ ... \ \cdot P_{n-1}/(1 + r_f)^{T_{i+} \ ... \ +T_{n-1}}$$

This is an expected value of NPV for a scheduled sale-starting time, which is presumed at the time of evaluation point.

$$EPAV(i) = I_{i+1} \times P_i/(1+r_f)^{T_i} + I_{i+2} \times P_i \times P_{i+1}/(1+r_f)^{T_i+T_i} +1 + \cdots$$
$$\cdots + I_n \times P_i \times \cdots \times P_{n-1}/(1+r_f)^{T_i+\cdots+T_{n-1}}$$

This is an expected value of the investing amount which will be needed for a period from the second next developing stage to the scheduled sale-starting time, and which is presumed at the time of evaluation point.
When the sale-starting time is supposed to be the developing stage n, the notations indicate the following:

NPV: NPV at the scheduled sale-starting time
$P_i$: a success probability of the developing stage i
$T_i$: the term of the developing stage i
$I_i$: an estimated investing amount in the developing stage i
$r_f$: a rate of interest with no risk

(2) Project value-calculating section

The present value (Pr) of the project at that time is determined by Equation 15 below.

[Equation 15]

$$Pr = C - I_1$$

$I_1$: An estimated investing amount in the next developing stage
Investment in the next developing stage is decided when the value of the project is positive (GO), and it is not decided when the value of the project is negative (NO GO). IRR and NPV for the scheduled sale-starting time can be used as reference data for comparing and examining the economical effect of a plurality of projects.
The profitability-evaluating system (A), of the present invention, which utilizes the real option method in a wide sense, can be operated by following the foregoing procedure.

In operation, by loading the foregoing respective equations on a commercially available spreadsheet soft or the like, the results of the evaluation can be obtained immediately after the input of several parameters. For example, Microsoft Excel (Microsoft Co., Ltd.) can be used to run the profitability-evaluating system (A) of the present invention.

The system of the present invention may be loaded on personal computers or a network server. In case where the system is loaded on personal computers, individual members who attend a meeting for evaluation using the system can input their data on their personal computers and make calculations in the meeting, respectively. Simultaneously, they can check the results and test the validity of the prerequisite and the input data, and thus, rapidly and efficiently operate the meeting for evaluation. The system of the present invention is very useful in not only the meeting for the evaluation in the company but also the meeting for the negotiation of licenses. That is, the validity of the conditions for their licenses can be quickly evaluated in the site of a meeting for negotiation, and thus, the negotiation time can be saved.

On the other hand, in case where the system of the present invention is loaded on a network server, the members who attend a Online conference using the system can freely input a plurality of data and make calculations using the data. By analyzing later the inputted data, the features of the individual projects can be analyzed, and the results of the analyses can be reflected on calculations for the evaluation of an analogous subject matter.

III. Profitability-Evaluating System (B)

The profitability-evaluating system (A) of the present invention can be operated by the foregoing procedure. However, to carry out the real option method in a narrow sense without any operator's arbitrariness in the setting of a volatility to thereby make more strict evaluation, the profitability-evaluating system (B) described below is used.

(1) Monte Car lo Simulation

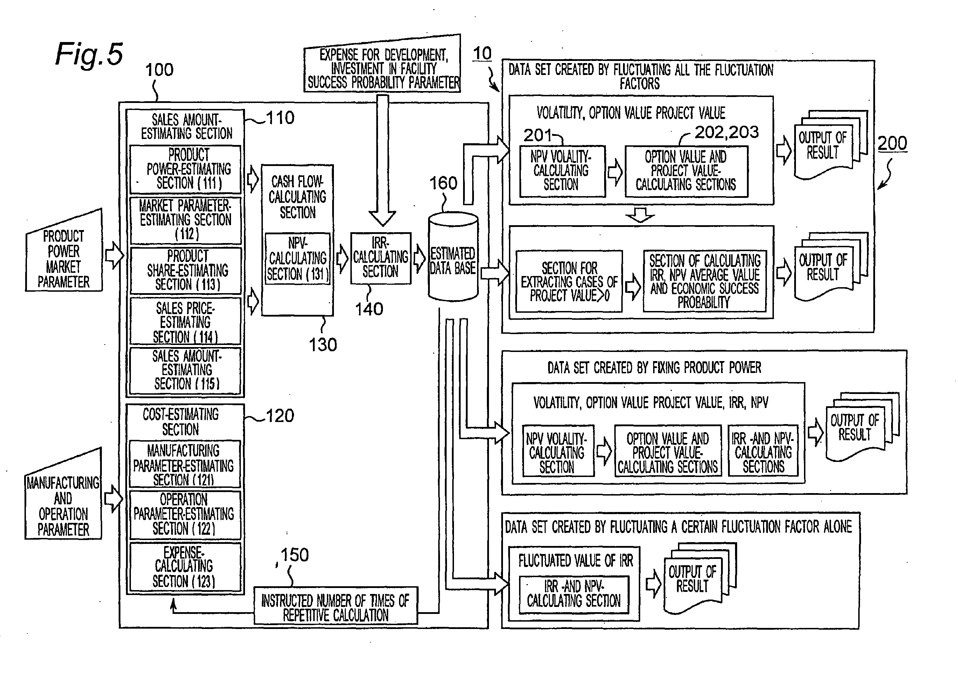

Fig. 5 is a flowchart illustrating a whole of the system (B) of the present invention. Also, the system (B) essentially consists of a data set-creating subsystem (100) and a management index-calculating system (200).

In the system (B), the respective values (UNS, a scheduled sale-starting time, an estimated sales price, the amount of a product administered per day, a manufacturing unit price, a royalty, a rate of exchange, etc.) determined in the items (1) to (4) of 1 of the system (A) are simulated in accordance with their distribution widths, by using the Monte Car lo method.

Through the simulation, a data set (a) can be obtained by fluctuating the values of all parameters within distribution widths peculiar to the parameters. Further, it is also possible to obtain a data set (b) for determining parameters by fixing the value of a product power (UNS) and fluctuating other parameters at random, or a data set (c) for determining parameters by fluctuating a certain parameter alone. These data sets are useful to carry out digressive analyses.

Although the number of repetition of simulations is not particularly limited, it is preferable that the simulation is repeated such a number of times that the convergence of the results can become sufficient during acceptable processing time: for example, the simulations is repeated 100 times or more, preferably 500 times or more.

One example of the data set (a) thus obtained is shown in Table 1.

[Table 1]

| Item | | Case 1 | Case 2 | ... | Case 1,000 |
|---|---|---|---|---|---|
| The number of potential patients (10,000 persons/unit) | Scheduled sales-starting year | 50 | 50 | ... | 50 |
| | | \| | \| | \| | \| |
| | Final year for the object to be evaluated | 60 | 60 | | 60 |
| Rate of diagnosis | The same as above | 60% | 60% | ... | 60% |
| | | \| | \| | | \| |
| | | 65% | 65% | | 65% |
| Rate of prescription | The same as above | 70% | 70% | ... | 70% |
| | | \| | \| | | \| |
| | | 80% | 80% | | 80% |

[Table 1]   (continued)

| Item | | Case 1 | Case 2 | ... | Case 1,000 |
|---|---|---|---|---|---|
| The number of patients to whom a drug is administered (10,000 persons/unit) | The same as above | 21 \| 31 | 21 \| 31 | ... | 21 \| 31 |
| UNS | Medical drug candidate under development | 2.22 | 2.34 | ... | 2.15 |
| | Typical compound of category A | 2.22 | 2.22 | | 2.22 |
| | Typical compound of category B: | 2.30 | 2.30 | | 2.30 |
| | Competitive product A of the same category | 2.40 | 2.40 | | 2.40 |
| | Competitive product B of the same category: | 2.35 | 2.35 | | 2.35 |
| Scheduled sale-starting time (year) | Typical compound of category A | 1995 | 1995 | ... | 1995 |
| | Typical compound of category B | 1999 | 1999 | | 1999 |
| | The same developed medical drug | 2005 | 2005 | | 2005 |
| | Competitive product A of the same category | 2004 | 2004 | | 2004 |
| | Competitive product B of the same category: | 2006 | 2006 | | 2006 |
| Sales force (persons) | The same developed medical drug | 1000 | 1000 | ... | 1000 |
| | Competitive product A of the same category | 800 | 800 | | 800 |
| | Competitive product B of the same category: | 1100 | 1100 | | 1100 |
| Category share | Scheduled sale-starting year for the same developed product \| Final year for the object to be evaluated | 20% \| 40% | 15% \| 35% | ... | 30% \| 52% |
| Market share of medical drug candidate under development | The same as above (to be continued) | 7% \| 18% | 5% \| 12% | ... | 12% \| 30% |
| Estimated sales amount of developed compound based on the amount of the compound administered for prescribed number of days (10,000 persons/unit & the number of days) | The same as above | 88 \| 670 | 47 \| 391 | ... | 227 \| 1451 |
| Estimated sales price of the developed drug (price (e.g., ¥) per day) | The same as above | 180 \| 200 | 180 \| 200 | ... | 200 \| 220 |
| Estimated sales amount of the developed drug (e.g., ¥100,000,000/unit) | The same as above | 1.6 \| 13 | 0.8 \| 8 | ... | 4.5 \| 29 |

[Table 1]   (continued)

| Item | | Case 1 | Case 2 | ... | Case 1,000 |
|---|---|---|---|---|---|
| Amount of developed drug administered per day (e.g., mg) | Scheduled sale-starting year of the same drug<br><br>\|<br><br>Final year for the object to be evaluated | 10 | 50 | ... | 30 |
| Manufacturing unit price of developed drug (e.g., ¥/10 mg tablet) | The same as above | 15<br>\|<br>18 | 16<br>\|<br>20 | ... | 12<br>\|<br>15 |
| Estimated expense | The same as above | $a1_1$<br>\|<br>$a1_n$ | $a2_1$<br>\|<br>$a2_n$ | ... | $a1000_1$<br>\|<br>$a1000_n$ |
| Cash flow | The same as above | $b1_1$<br>\|<br>$b1_n$ | $b2_1$<br>\|<br>$b2_n$ | ... | $b1000_1$<br>\|<br>$b1000_n$ |
| NPV for scheduled sale-starting time | | c1 | c2 | ... | c1000 |
| Time of evaluation points | Point 1<br>Point 2 | Dec., 2000<br>Feb., 2001 | Dec., 2000<br>Feb., 2001 | ... | Dec., 2000<br>Feb., 2001 |
| Estimated investing amount in each of developing stages (e.g., ¥100,000,000/unit) : | Developing stage 1<br>Developing stage 2 | 10<br>20 | 10<br>20 | ... | 10<br>20 |
| Success probability | Developing stage 1<br>Developing stage 2 : | 0.7<br>0.6 | 0.7<br>0.6 | ... | 0.7<br>0.6 |
| IRR | | d1 | d2 | ... | d1000 |

In this regard, it is also possible to carry out the repetitive calculation after the completion of the calculation of all the values. Further, it is also possible to obtain a data set by repeatedly calculating an optionally selected value alone such as an UNS value or the like within its distribution width, and calculating other parameter from the solution thereof to thereby create the data set.

(2) Volatility-Calculating Section

In the system (B), the management index-calculating subsystem (200) comprises a NPV volatility-calculating section (201), an option value-calculating section (202) and a project value-calculating section (203). The subsystem (200) calculates a management index of the medical drug candidate under development at the time of evaluation point, from any of the data sets (a) to (c) created in the data set-creating subsystem (100), by applying the real option method. Specifically, the subsystem (200) sets a volatility from the fluctuation width of NPV for scheduled sale-starting time and from the term up to the scheduled sale-starting time from the data set (a), to thereby obtain the option value and the project value of the medical drug candidate under development as the management index by the equation of the Black-Scholes which is used for a call option for stock.

Table 2 shows a corresponding relationship among parameters of call options for stock, parameters for use in evaluation of investment, and the parameters of the system of the present invention.

[Table 2]

| Para-emeter | Call Option | Evaluation of investment | Evaluation method of the present invention |
|---|---|---|---|
| S | Stock price | Present value of project to be obtained | Expected present value of NPV for scheduled sale-starting time, which is evaluated at the time of starting next developing stage |
| X | Price for enforcing a right | Expense required for obtaining project asset | Present value of expected investment after the next developing stage |
| T | Enforcing term of the right | Term within which decision may be delayed | Term of next developing stage |
| $r_f$ | Rate of interest with no risk | Time value of fund | Rate of interest with no risk |
| σ | Standard deviation of gain from investment in stock | Risk of project | Value obtained by dividing standard deviation per year of NPV for scheduled sale-starting time by S |

The respective management indexes are calculated by substituting these parameters in the equation of the Black-Scholes described below.

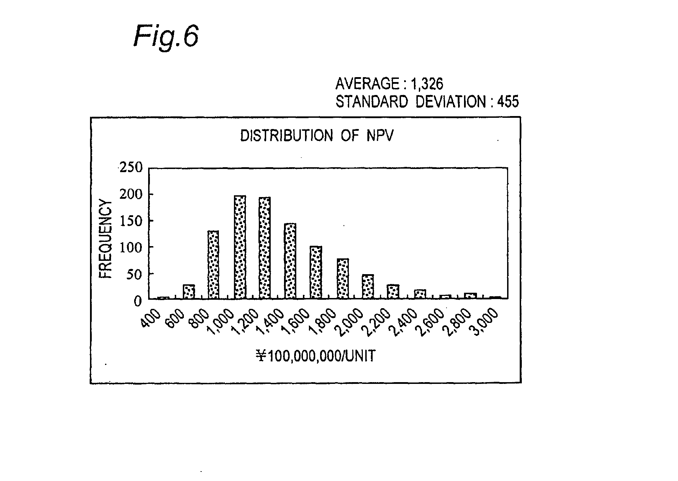

The volatility-calculating section (201) calculates a volatility (σ). In the system (B) of the present invention, the fluctuation width of NPV is used as a volatility (σ) in the equation of the Black-Scholes for calculating the value of an option, as will be described later. For example, the distribution width of NPV determined from the simulation by 1,000 times of the above repetitive calculation is shown in Fig. 6.

At this time, the average standard deviation (SD) of NPV per year is expressed by Equation 16 below.

[Equation 16]

$$SD = \frac{SD_{NPV}}{\sqrt{T}}$$

$SD_{NPV}$: The standard deviation of NPV for a scheduled sale-starting time
T: The term (years) from the time of evaluation point to the scheduled sale-starting time

Further, the volatility (σ) is defined as a ratio of the average standard deviation (SD) of NPV per year to the average value of the expected present value of NPV (NPVn). This volatility (σ) is determined by Equation 17 below.

[Equation 17]

$$\sigma = \frac{SD}{NPV_n}$$

Herein, NPVn is determined by Equation 18 below.

[Equation 18]

$$NPVn = NPV1 / (1+r_f)^T$$

NPV1: The expected average NPV for the scheduled sale-starting time
$r_f$: The rate of interest with no risk
T: The term (years) from the time of evaluation point to the scheduled sale-starting time

In the conventional real option method, a historical volatility, forecast volatility, seasonal volatility or the like is used as the value of the above volatility (see "Real Options Evaluation Pharmaceutical R&D: A new approach to financial project evaluation" as described above). Therefore, the conventional real option method has a danger of inducing a result which involves private risk and lacks objectivity. In the system of the present invention, this problem can be overcome by determining a volatility from the fluctuation width of NPV.

(3) Option Value-Calculating Section

The option value-calculating section (202) calculates the value of an option by using the volatility (σ) which is determined by the volatility-calculating section (201).
This is described in detail. The value of an option according to the present invention is calculated by a method described later, using the volatility univocally determined in accordance with the above mentioned definition. The value of an option becomes higher as (i) the ratio of the investment and the return (S/X) becomes larger, and as (ii) the volatility becomes larger. The meaning of (ii) is to duly appreciate the possibility of great success or failure of a medical drug candidate under development as has been already known. In this evaluation, the evaluation widths of the market scale and the competitive power of the medical drug candidate under development are not processed as average values. This evaluation is based on the idea that an investment is decided when a positive aspect is observed, and that an investment is not decided when a negative aspect is observed.
In the normal estimation, the ratio of S/X is sufficiently large, and therefore, the influence of the volatility is not so important. However, the volatility seriously influences the value of an option in case where the ratio of S/X approximates 1 and where the return is not so large as compared with the investment. In such a case, if the real option method is employed for the calculation, the results may be positive. However, if the NPV method is employed, it may be negative. Thus, sometimes, the induced conclusion may be inverted. Therefore, the real option method is more suitable in order to duly evaluate a potential value which corresponds to a future uncertainty of the project.
The present value of the project is used to determine the priority of developed projects. However, the present value of the project found when the developing stage is started may be used, if the developing stage is proceeding. The additional value of the development in a certain developing stage of the project is expressed as a difference between the present value of the project found when the developing stage is started and the present value of the project found when the next developing stage is started.
If the option of GO is selected when the next developing stage is started, the value (C) of the option can be determined by the equation of the Black-Scholes (Equation 19) using the volatility (σ) previously found.

[Equation 19]

$$C = SN(d_1) - Xe^{-r_f t} N(d_2)$$

$$d_1 = \frac{\ln(S/X)+(r_f+\sigma^2/2)t}{\sigma\sqrt{t}}$$

$$d_2 = \frac{\ln(S/X)+(r_f-\sigma^2/2)t}{\sigma\sqrt{t}}$$

S: The expected present value of NPV for the scheduled sale-starting time, presumed at the time of starting the next developing stage

X: The present value of the expected investing amount after the second next developing stage

$r_f$: The rate of interest with no risk

t: The term of the next developing stage

σ: The ratio of the standard deviation per year of NPV for the scheduled sale-starting time / the present value of the expected average NPV for the scheduled sale-starting time N(d): a function of the accumulation density of the standard normal distribution

In this regard, X is determined by Equation 20 below.

[Equation 20]

$$X = P_1 \cdot I_2 + P_1 \cdot P_2 \cdot I_3 / (1+r_f)^{t2} + ... + P_1 \cdot P_2 \cdot P_3 ... \cdot P_n \cdot I_n / (1+r_f)^{(t2+t3+....tn)}$$

$P_1$ to $P_n$: The success probability of each of the developing stages after the next developing stage

$I_2$ to $I_n$: The estimated investing amount in each of the developing stages after the second next developing stage

$r_f$: The rate of interest with no risk

$t_2$ to $t_n$: the term (years) of each of the developing stages after the second next developing stage

The method of calculating the value of the project using the value of the option determined as above has already been described above.

In the meantime, the cases of the positive present value (Pr) of the project is counted, and the ratio of the positive present values (an economical success probability) to a whole of the data set created by the simulations is determined. By doing so, an index which informs an economical risk of a whole of the development of the medical drug can be obtained.

It is preferable to analyze the sensitivity of each of the parameters which influences the result, such as the fluctuation of NPV or the like, using the data set (c) obtained by fluctuating only one parameter and fixing other parameters at the average values. The results of the sensitivity analyses can be used to specify a risk factor which is important for the evaluation of an intended medical drug candidate under development.

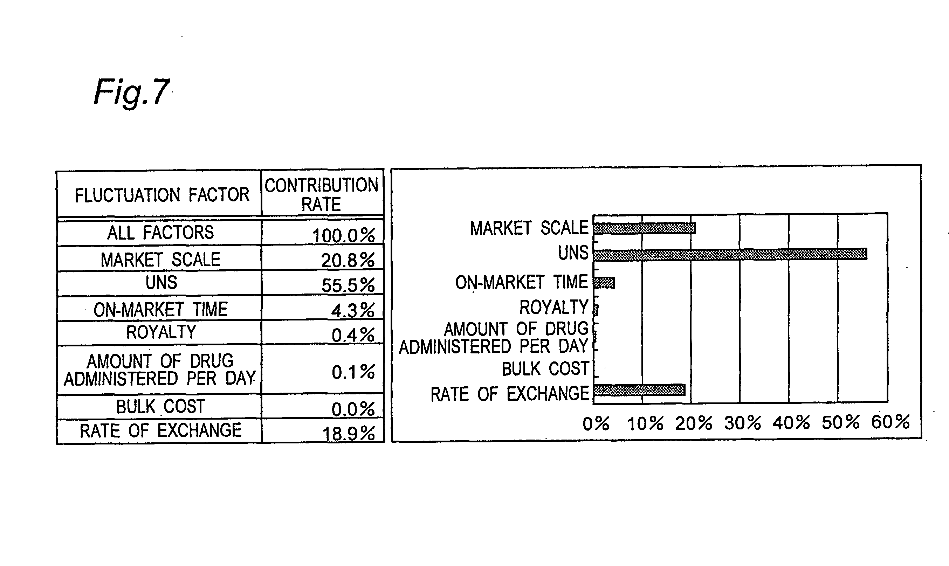

Fig. 7 is a graph illustrating the contribution rates of the distribution state of NPV and the respective factors to the fluctuation of NPV, which are found from 1,000 times of simulations, while independently changing the market scale, the UNS of the medical drug candidate under development, etc. In case where each of the fluctuation factors is independent, a relationship represented by Equation 21 below is established between the fluctuation of NPV ($SD^2_T$) obtained by simultaneously changing all the factors, and the fluctuation of NPV ($SD^2_{market\ scale}$, $SD^2_{UNS}$, ...) obtained by singly changing each of the factors (while fixing other factors at their average values).

[Equation 21]

$$SD^2_T = SD^2_{market\ scale} + SD^2_{UNS} + SD^2_{on\text{-}market\ period} + SD^2_{royalty} +$$

$$SD^2_{amount\ of\ drug} + SD^2_{bulk\ cost} + SD^2_{rate\ of\ exchange}$$

Accordingly, the contribution rate of each of the factors to the fluctuation of NPV can be determined by Equation 22 below (see Fig. 7).

[Equation 22]

$$\text{Contribution rate} = SD^2_{factor} / SD^2_T$$

# EP 1 327 947 A1

**Claims**

1. A profitability-evaluating system for a medical drug candidate under development, comprising a data set-creating subsystem and a management index-calculating subsystem, wherein said data set-creating subsystem includes

   a sales amount-estimating section for estimating a sales amount of a product,
   an Cost-estimating section for estimating an expense,
   a NPV-calculating section for calculating a cash flow and a net present value from an estimated sales amount and an estimated expense,
   an IRR-calculating section for calculating an internal rate of return from the cash flow, an estimated investing amount, and a success probability, and
   a data set-recording section for recording the respective values determined by these estimating sections and calculating sections; and
   said management index-calculating subsystem includes
   an option value-calculating section for calculating the value of an option from the data set on the data set recording section, and
   a project value-calculating section for calculating the value of a project of developing a medical drug from the value of the option.

2. A profitability-evaluating system for a medical drug candidate under development, comprising a data set-creating subsystem and a management index-calculating subsystem, wherein said data set-creating subsystem includes

   a sales amount-estimating section for estimating a sales amount of a product,
   an Cost-estimating section for estimating an expense,
   a NPV-calculating section for calculating a cash flow and a net present value from an estimated sales amount and an estimated expense,
   an IRR-calculating section for calculating an internal rate of return from the cash flow, an estimated investing amount, and a success probability,
   a repetitive calculation section for creating a data set by fluctuating the respective values determined by these estimating sections and calculating sections within the predetermined distribution widths, and
   a data set-recording section for recording the data set created by the repetitive calculation section; and said management index-calculating subsystem includes
   a volatility-calculating section for calculating a volatility from the data set on the data set-recording section,
   an option value-calculating section for calculating the value of an option by using the calculated volatility, and
   a project value-calculating section for calculating the value of a project of developing a medical drug from the value of the option.

3. The profitability-evaluating system of claim 2, wherein the option value-calculating section calculates the value of the option by the equation of the Black-Scholes, using the volatility previously calculated.

4. The profitability-evaluating system of claim 2 or 3, wherein the volatility is calculated from the fluctuation width of a net present value.

5. The profitability-evaluating system of any one of claims 2 to 4, wherein the repetitive calculation section creates a data set by fluctuating all the values within the respective distribution widths peculiar to the values.

6. The profitability-evaluating system of any one of claims 2 to 4, wherein the repetitive calculation section creates a data set by fixing at least one value and fluctuating other values within the respective distribution widths peculiar to the values.

7. The profitability-evaluating system of any one of claims 1 to 6, wherein the Cost-estimating section estimates an expense from a manufacturing parameter and an operation parameter.

8. The profitability-evaluating system of any one of claims 1 to 6, wherein the sales amount-estimating section estimates a sales amount from at least a product power.

Fig.1

EXPENSE FOR DEVELOPMENT, INVESTMENT IN FACILITY SUCCESS PROBABILITY PARAMETER

10

DATA SET-CREATING SUBSYSTEM 100

110
SALES AMOUNT-ESTIMATING SECTION
PRODUCT POWER-ESTIMATING SECTION ( 111 )
MARKET PARAMETER-ESTIMATING SECTION ( 112 )
PRODUCT SHARE-ESTIMATING SECTION ( 113 )
SALES PRICE-ESTIMATING SECTION ( 114 )
SALES AMOUNT-ESTIMATING SECTION ( 115 )

PRODUCT POWER MARKET PARAMETER

130
CASH FLOW-CALCULATING SECTION
NPV-CALCULATING SECTION ( 131 )

140
IRR-CALCULATING SECTION

160
DATA SET-RECORDING SECTION

200
MANAGEMENT INDEX-CALCULATING SUBSYSTEM
202,203
OPTION VALUE-AND PROJECT VALUE-CALCULATING SECTIONS

OUTPUT OF RESULT

120
COST-ESTIMATING SECTION
MANUFACTURING PARAMETER-ESTIMATING SECTION ( 121 )
OPERATION PARAMETER-ESTIMATING SECTION ( 122 )
EXPENSE-CALCULATING SECTION ( 123 )

MANUFACTURING AND OPERATION PARAMETER

EP 1 327 947 A1

## Fig.2

UNS AND PROBABILITY DISTRIBUTION OF DEVELOPED MEDICAL DRUG (EARLY STAGE OF DEVELOPMENT)

FAILURE

SUCCESS

PESSIMISTIC VALUE UNSp

OPTIMISTIC VALUE UNSo

# Fig.3

UNS AND PROBABILITY DISTRIBUTION OF DEVELOPED MEDICAL DRUG (LATTER STAGE 1 OF DEVELOPMENT)

SUCCESS

FAILURE

PESSIMISTIC VALUE UNSp

MAXIMUM VALUE UNSmp

OPTIMISTIC VALUE UNSo

## Fig.4

UNS AND PROBABILITY DISTRIBUTION OF DEVELOPED MEDICAL DRUG (LATTER STAGE 2 OF DEVELOPMENT)

SUCCESS

FAILURE

PESSIMISTIC VALUE UNSp

MAXIMUM VALUE UNSmp

OPTIMISTIC VALUE UNSo

**Fig.5**

EP 1 327 947 A1

## Fig.6

AVERAGE : 1,326
STANDARD DEVIATION : 455

DISTRIBUTION OF NPV

¥100,000,000/UNIT

## Fig.7

| FLUCTUATION FACTOR | CONTRIBUTION RATE |
|---|---|
| ALL FACTORS | 100.0% |
| MARKET SCALE | 20.8% |
| UNS | 55.5% |
| ON-MARKET TIME | 4.3% |
| ROYALTY | 0.4% |
| AMOUNT OF DRUG ADMINISTERED PER DAY | 0.1% |
| BULK COST | 0.0% |
| RATE OF EXCHANGE | 18.9% |

<table>
<tr><td colspan="2" align="center"><b>INTERNATIONAL SEARCH REPORT</b></td><td>International application No.<br>PCT/JP01/08226</td></tr>
</table>

| A. | CLASSIFICATION OF SUBJECT MATTER |
|---|---|

Int.Cl⁷   G06F17/60

According to International Patent Classification (IPC) or to both national classification and IPC

**B.   FIELDS SEARCHED**

Minimum documentation searched (classification system followed by classification symbols)
Int.Cl⁷   G06F17/60

Documentation searched other than minimum documentation to the extent that such documents are included in the fields searched
Jitsuyo Shinan Koho          1922-1996     Toroku Jitsuyo Shinan Koho   1994-2001
Kokai Jitsuyo Shinan Koho    1971-2001     Jitsuyo Shinan Toroku Koho   1996-2001

Electronic data base consulted during the international search (name of data base and, where practicable, search terms used)
JICST FILE (JOIS)

**C.   DOCUMENTS CONSIDERED TO BE RELEVANT**

| Category* | Citation of document, with indication, where appropriate, of the relevant passages | Relevant to claim No. |
|---|---|---|
| X | Toshiharu KATO, "Petorobureisu-sha to Amugen-sha no Jigyou Toushi Hyouka; Real Option Approach no Jittai to Kouka, Diamond Harvard Business, 01 September, 2000 (01.09.00), Vol.25, No.5, pages 86 to 95 | 1-8 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>31 October, 2001 (31.10.01) | Date of mailing of the international search report<br>13 November, 2001 (13.11.01) |
|---|---|
| Name and mailing address of the ISA/<br>Japanese Patent Office | Authorized officer |
| Facsimile No. | Telephone No. |

Form PCT/ISA/210 (second sheet) (July 1992)